# FASCICULE DE BREVET EUROPEEN

(11) **EP 3 593 682 B1**
(45) Date de publication et mention de la délivrance du brevet: **01.12.2021**
(21) Numéro de dépôt: 19180716.3
(22) Date de dépôt: 17.06.2019
(51) Int. Cl.: A47J 36/06

(54) **COUVERCLE COMPORTANT UNE PIÈCE EN VERRE**
DECKEL MIT EINEM TEIL AUS GLAS
LID COMPRISING A PART MADE OF GLASS

(30) Priorité: 13.07.2018 FR 1856520
(43) Date de publication de la demande: 15.01.2020
(73) Titulaire: SEB S.A., 69130 Ecully (FR)
(72) Inventeur: MORIN, Yoann, 53470 MARTIGNE-SUR-MAYENNE (FR); CERCLIER, Philippe, 53440 ARON (FR)
(74) Mandataire: SEB Développement

(56) Documents cités:
- EP-A1- 3 311 717
- FR-A1- 2 999 403
- FR-A1- 3 002 426
- GB-A- 2 547 683
- KR-B1- 101 499 615

## Description

La présente invention concerne le domaine technique des couvercles de récipients culinaires utilisés pour la préparation et/ou la cuisson des aliments. La présente invention concerne plus particulièrement les couvercles du type précité comportant une pièce en verre.

La présente invention concerne notamment, mais non exclusivement, les couvercles des récipients de travail des appareils électroménagers de préparation culinaire, chauffants ou non.

Le document FR3002426 divulgue un couvercle pour un récipient de travail d'un appareil électroménager de préparation culinaire multifonctions, comportant une pièce annulaire inférieure et une pièce en verre portée par la pièce annulaire inférieure. Toutefois la pièce en verre est maintenue par un habillage métallique apte à se déformer pour solidariser la pièce annulaire inférieure et la pièce en verre par compression. Un tel assemblage est délicat à réaliser.

Un couvercle selon le préambule de la revendication 1 est connu du document FR3002426. Le document EP3311717 divulgue un élément annulaire d'étanchéité comprenant une couronne porte-joint portant un joint d'étanchéité prévu pour venir en appui sur un rebord supérieur du récipient de travail d'un appareil électroménager de préparation culinaire.

Un objet de la présente invention est de proposer un couvercle du type précité, dont la construction est plus simple à réaliser.

Cet objet est atteint avec un couvercle pour un récipient culinaire selon la revendication 1. Ces dispositions permettent de prévenir l'entrée d'aliments entre la pièce en verre et la couronne porte-joint. Ces dispositions permettent d'obtenir un couvercle comportant une pièce en verre avec un joint annulaire, dans lequel le joint annulaire est maintenu entre un capot extérieur annulaire et un élément annulaire, avec une bonne étanchéité entre l'élément annulaire et le joint annulaire. Ces dispositions permettent d'obtenir un maintien de la pièce en verre simple, fiable et économique. L'élément annulaire peut être mis en place dans le capot extérieur annulaire par un simple mouvement axial. Si désiré le joint d'étanchéité peut être amovible par rapport à la couronne porte-joint. En alternative, le joint d'étanchéité peut notamment être surmoulé sur la couronne porte-joint.

Avantageusement, les butées supérieures de retenue sont agencées à différents niveaux sur la paroi intérieure. Cette disposition permet de faciliter l'implantation des butées supérieures de retenue.

Selon une forme de réalisation, l'élément annulaire comporte un corps annulaire à partir duquel s'étendent des languettes inférieures réparties autour du corps annulaire.

Avantageusement alors, le corps annulaire et les languettes inférieures viennent en appui contre les butées supérieures de retenue lorsque l'élément annulaire est en place dans le capot extérieur annulaire contre le joint annulaire.

Avantageusement alors, les languettes inférieures présentent des conformations internes, et la couronne porte-joint est retenue par les conformations internes sous l'élément annulaire. Cette disposition permet de faciliter la mise en place de la couronne porte-joint.

Avantageusement, la couronne porte-joint est montée libre en rotation sous l'élément annulaire. Cette disposition permet de faciliter le verrouillage par rotation du couvercle sur un récipient, notamment en utilisant un dispositif de verrouillage par baïonnette.

Avantageusement encore, le corps annulaire présente des passages dans lesquels s'étendent des tiges portées par la paroi intérieure du capot extérieur annulaire. Cette disposition permet de bloquer la rotation du corps annulaire par rapport au capot extérieur annulaire.

Avantageusement alors, les tiges sont soudées par ultrasons avec le capot extérieur annulaire et l'élément annulaire. Cette disposition permet d'obtenir un assemblage durable du couvercle.

Avantageusement encore, la paroi intérieure présente au moins une butée inférieure d'appui contre laquelle repose l'élément annulaire venant en appui contre les butées supérieures de retenue. Cette disposition permet d'éviter un écrasement excessif du joint annulaire.

Avantageusement alors, ladite au moins une butée inférieure d'appui est annulaire. Cette disposition permet de mieux répartir la pression exercée sur le joint annulaire.

Avantageusement encore, le couvercle comporte au moins une poignée issue du capot extérieur annulaire. Une telle réalisation est bien adaptée à un capot extérieur annulaire réalisé en matière plastique.

Avantageusement alors, le couvercle comporte deux poignées opposées issues du capot extérieur annulaire. Cette disposition permet de faciliter la manipulation du couvercle.

Avantageusement encore, le capot extérieur annulaire comporte des languettes internes de verrouillage par baïonnette. Cette disposition permet de réaliser de manière simple et économique un couvercle pouvant être verrouillé par baïonnette sur un récipient tel qu'un récipient de travail d'un appareil électroménager de préparation culinaire, notamment d'un appareil électroménager de préparation culinaire chauffant.

L'invention sera mieux comprise à l'étude d'un exemple de réalisation, pris à titre nullement limitatif, illustré dans les figures annexées, dans lesquelles :
- la figure 1 est une vue en perspective de dessous d'un capot extérieur annulaire appartenant à un exemple de réalisation de l'invention,
- la figure 2 est une vue en perspective de dessous d'une pièce en verre portant un joint périphérique, appartenant à un exemple de réalisation de l'invention,
- la figure 3 est une vue en perspective de dessous d'un élément annulaire appartenant à un exemple de réalisation de l'invention,
- la figure 4 est une vue en perspective de dessous d'une couronne porte-joint appartenant à un exemple de réalisation de l'invention,
- la figure 5 est une vue en perspective de dessous d'un joint d'étanchéité appartenant à un exemple de réalisation de l'invention,
- la figure 6 est une vue en perspective de dessous du capot extérieur illustré sur la figure 1, de la pièce en verre et du joint périphérique illustrés sur la figure 2, et de l'élément annulaire illustré sur la figure 3, en configuration assemblée,
- la figure 7 est une vue en perspective de dessous du capot extérieur illustré sur la figure 1, de la pièce en verre et du joint périphérique illustrés sur la figure 2, de l'élément annulaire illustré sur la figure 3, de la couronne porte-joint illustrée sur la figure 4, et du joint d'étanchéité illustré sur la figure 5, en configuration assemblée,
- la figure 8 est une vue partielle en coupe radiale du capot extérieur illustré sur la figure 1, de la pièce en verre et du joint périphérique illustrés sur la figure 2, de l'élément annulaire illustré sur la figure 3, de la couronne porte-joint illustrée sur la figure 4, et du joint d'étanchéité illustré sur la figure 5, en configuration assemblée.

Le couvercle 1 pour récipient culinaire, illustré sur les 7 et 8, est prévu pour être utilisé avec un récipient de travail d'un appareil électroménager de préparation culinaire tel que notamment un robot culinaire chauffant (non représenté sur les figures).

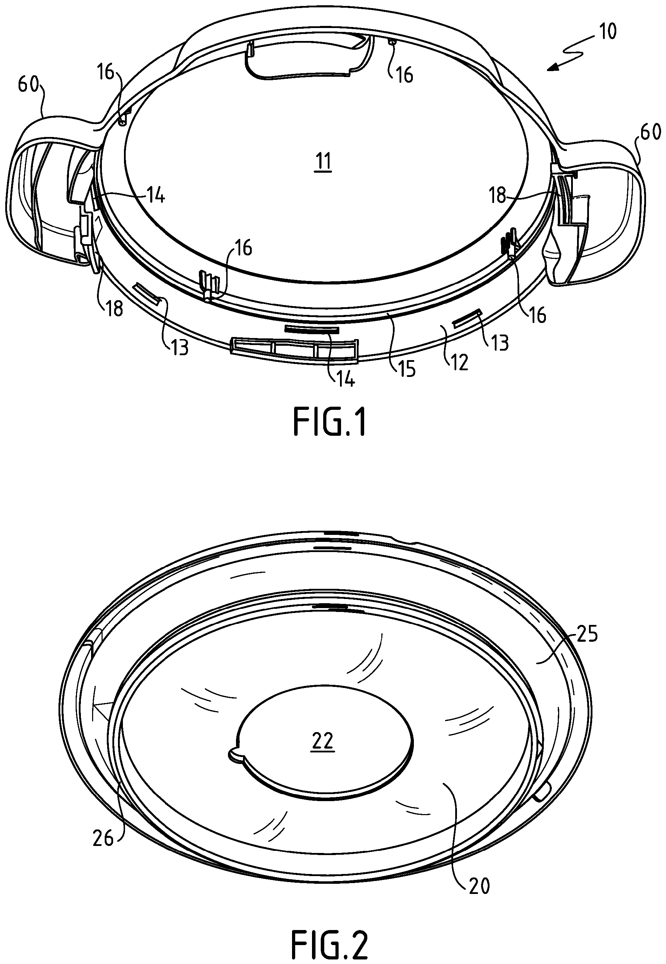

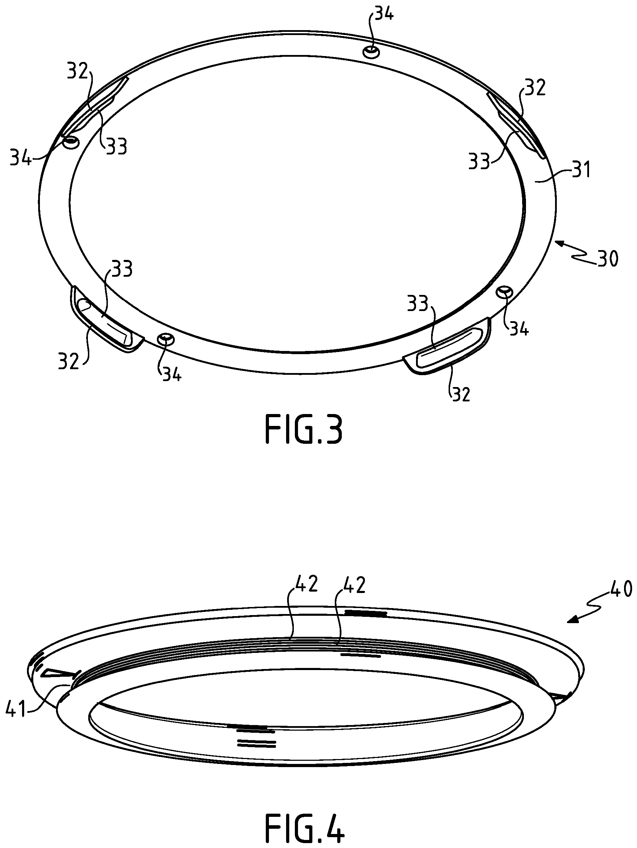

Tel que visible sur les figures 1 à 8, le couvercle 1 comporte un capot extérieur annulaire 10, représenté sur la figure 1, une pièce en verre 20 et un joint annulaire 25, représentés sur la figure 2, et un élément annulaire 30, représenté sur la figure 3.

Tel que visible sur la figure 1, le capot extérieur annulaire 10 définit une ouverture 11. Le capot extérieur annulaire 10 présente une paroi intérieure 12. Plus particulièrement dans l'exemple de réalisation illustré sur les figures, l'ouverture 11 est délimitée par l'extrémité supérieure de la paroi intérieure 12.

La paroi intérieure 12 présente des butées supérieures de retenue 13, 14 prévues pour retenir l'élément annulaire. Les butées supérieures de retenue sont réparties autour de l'ouverture 11. Plus particulièrement dans l'exemple de réalisation illustré sur les figures, les butées supérieures de retenue 13, 14 sont agencées à différents niveaux sur la paroi intérieure 12.

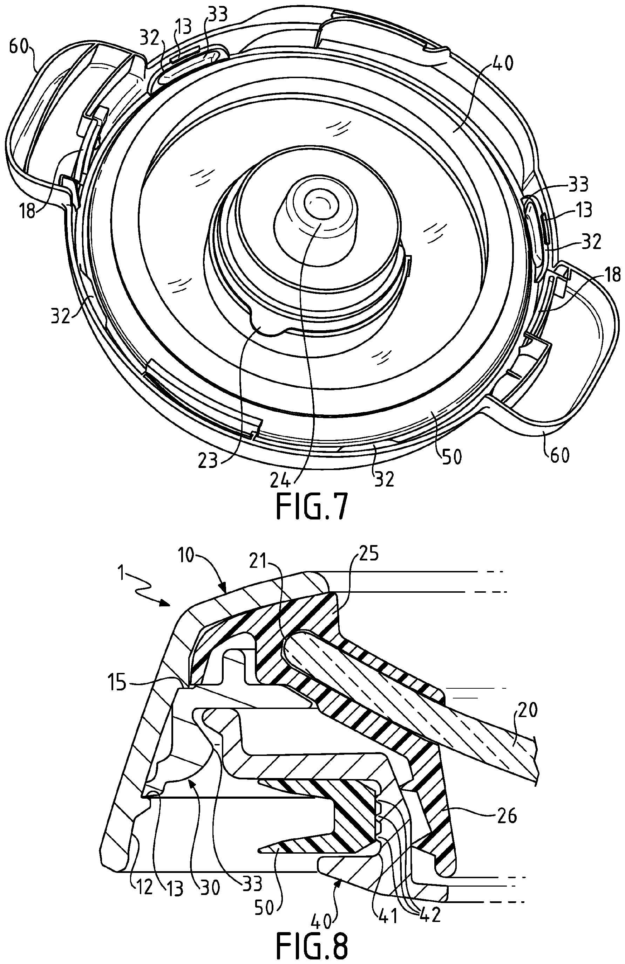

La figure 2 illustre le joint annulaire 25 monté sur la pièce en verre 20. Tel que visible sur la figure 8, la pièce en verre 20 présente une bordure périphérique 21. Le joint annulaire 25 est réalisé de préférence en matériau élastomère, notamment en silicone. Le joint annulaire 25 est monté sur la bordure périphérique 21. Si désiré, le joint annulaire 25 peut être surmoulé sur la pièce en verre 20.

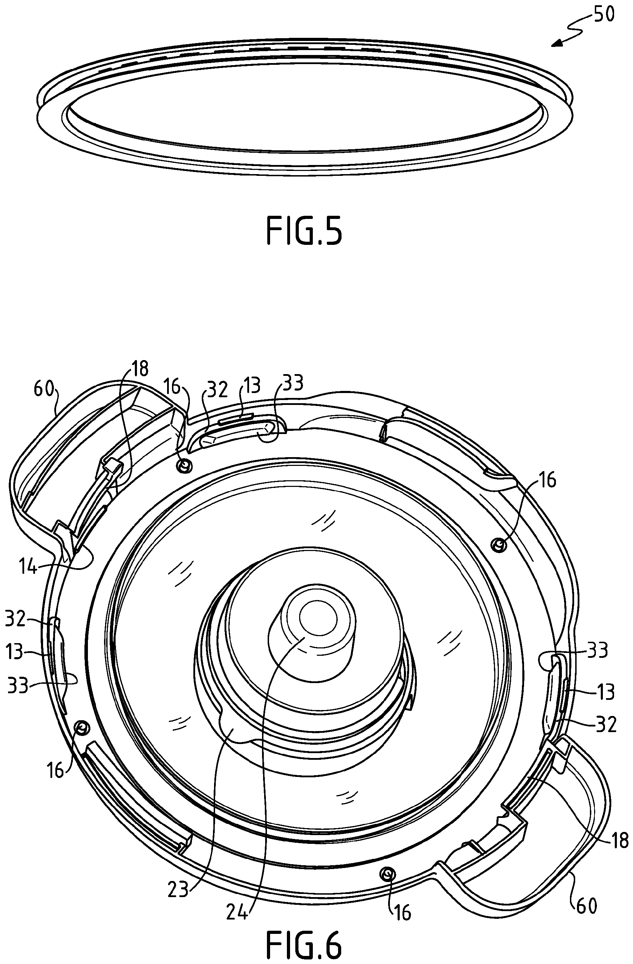

Plus particulièrement dans l'exemple de réalisation illustré sur les figures, la pièce en verre 20 est annulaire et présente un passage central 22, visible sur la figure 2. Tel que visible sur les figures 6 et 7, une protubérance centrale 23 est montée sur la pièce en verre 20. La protubérance centrale 23 comporte un logement de réception d'un bouchon 24 amovible. Le logement est de préférence traversant. Si désiré un passage d'échappement de vapeur peut être ménagé dans la pièce en verre 20 et/ou dans la protubérance centrale 23 en complément ou en substitution du logement.

Tel que visible sur les figures 3 et 6, l'élément annulaire 30 comporte un corps annulaire 31. Plus particulièrement dans l'exemple de réalisation illustré sur les figures, des languettes inférieures 32 s'étendent à partir du corps annulaire 31. Les languettes inférieures 32 sont réparties autour du corps annulaire 31. Les languettes inférieures 32 sont par exemple au nombre de quatre.

Selon l'invention et tel qu'illustré sur les figures 4, 5, 7 et 8, le couvercle 1 comporte un élément annulaire d'étanchéité comprenant une couronne porte-joint 40, représentée sur la figure 4, et un joint d'étanchéité 50. Le joint d'étanchéité 50 est réalisé de préférence en matériau élastomère, notamment en silicone. Le joint d'étanchéité 50 est prévu pour venir en appui sur un rebord supérieur du récipient de travail de l'appareil électroménager de préparation culinaire. La couronne porte-joint 40 porte le joint d'étanchéité 50, tel que représenté sur la figure 8. Tel que visible sur la figure 4, la couronne porte-joint 40 présente une gorge extérieure 41. Des nervures 42 sont formées au fond de la gorge extérieure 41 pour minimiser le contact entre la couronne porte-joint 40 et le joint d'étanchéité 50. Si désiré, la couronne porte-joint 40 peut être montée libre en rotation sous l'élément annulaire 30. En alternative ou en complément, le joint d'étanchéité 50 peut être monté libre en rotation par rapport à la couronne porte-joint 40.

Tel que visible sur les figures 3, 6, 7 et 8, les languettes inférieures 32 présentent des conformations internes 33. La couronne porte-joint 40 est retenue par les conformations internes 33 sous l'élément annulaire 30. Si désiré au moins une des conformations internes 33, et de préférence chacune des conformations internes 33 peut présenter une face inférieure chanfreinée pour faciliter la mise en place de la couronne porte-joint 40 dans l'élément annulaire 30, tel que visible sur la figure 8.

Tel que visible sur les figures 6 et 7, le couvercle 1 comporte deux poignées 60 opposées issues du capot extérieur annulaire 10. A titre de variante, le couvercle 1 peut notamment comporter au moins une poignée 60 issue du capot extérieur annulaire 10.

Plus particulièrement dans l'exemple de réalisation illustré sur les figures, le capot extérieur annulaire 10 comporte des languettes internes 18 de verrouillage par baïonnette, tel que visible sur les figures 1, 6 et 7. Les languettes internes 18 de verrouillage par baïonnette sont prévues pour venir en prise avec le récipient de travail de l'appareil électroménager de préparation culinaire.

Le capot extérieur annulaire 10 est assemblé avec l'élément annulaire 30 pour maintenir le joint annulaire 25. A cet effet, le capot extérieur annulaire 10 et/ou l'élément annulaire 30 sont élastiquement déformables pour mettre en place l'élément annulaire 30 dans le capot extérieur annulaire 10 contre le joint annulaire 25. L'élément annulaire 30 vient en appui contre les butées supérieures de retenue 13, 14 lorsque l'élément annulaire 30 est en place dans le capot extérieur annulaire 10 contre le joint annulaire 25, tel que représenté sur la figure 8.

Tel que représenté sur la figure 8, le joint annulaire 25 est visible sur le dessus du couvercle 1 entre le capot extérieur annulaire 10 et la pièce en verre 20. Le capot extérieur annulaire 10 recouvre l'élément annulaire 30 monté à l'intérieur de la paroi intérieure 12.

Tel que visible sur la figure 1, des tiges 16 sont portées par la paroi intérieure 12 du capot extérieur annulaire 10. Les tiges 16 peuvent être issues de la paroi intérieure 12. En d'autres termes, les tiges 16 et la paroi intérieure 12 peuvent être formées par une même pièce. Si désiré, les tiges 16 et le capot extérieur annulaire peuvent être formés par une même pièce. En alternative, les tiges 16 pourraient notamment être fixées dans des logements de la paroi intérieure 12.

Tel que visible sur la figure 3, le corps annulaire 31 présente des passages 34. Les passages 34 sont par exemple au nombre de quatre, décalés par rapport aux languettes inférieures 32. Tel que visible sur la figure 6, les tiges 16 s'étendent dans les passages 34. Si désiré, les tiges 16 peuvent traverser le joint annulaire 25, qui peut présenter d'autres passages (non représentés sur les figures) à cet effet.

Selon une forme de réalisation préférée, les tiges 16 sont soudées par ultrasons avec l'élément annulaire 30. En alternative, les tiges 16 pourraient notamment être assemblées avec l'élément annulaire 30 par bouterollage à air chaud, pour fusionner l'extrémité apparente de chaque tige 16 avec l'élément annulaire 30. L'élément annulaire 30 et les tiges 16 sont par exemple réalisés en polyamide. De préférence, les tiges 16 sont issues du capot extérieur annulaire 10, et le capot extérieur annulaire 10 est réalisé en polyamide.

Si désiré au moins une des butées supérieures de retenue 13, 14, et de préférence chacune des butées supérieures de retenue 13, 14, peut présenter une face inférieure chanfreinée pour faciliter la mise en place de l'élément annulaire 30 dans le capot extérieur annulaire 10 afin d'assembler le capot extérieur annulaire 10 avec l'élément annulaire 30 pour maintenir le joint annulaire 25.

Plus particulièrement dans l'exemple de réalisation illustré sur les figures, le corps annulaire 31 et les languettes inférieures 32 viennent en appui contre les butées supérieures de retenue 13, 14 lorsque l'élément annulaire 30 est en place dans le capot extérieur annulaire 10 contre le joint annulaire 25. Tel que visible sur la figure 8, le joint annulaire 25 comporte une couronne inférieure 26 venant en appui à l'intérieur de la couronne porte-joint 40.

Tel que représenté sur la figure 8, la paroi intérieure 12 présente au moins une butée inférieure d'appui 15. L'élément annulaire 30 venant en appui contre les butées supérieures de retenue 13, 14 repose également contre la butée inférieure d'appui 15. De préférence, la paroi intérieure 12 présente une butée inférieure d'appui 15 annulaire.

Le couvercle 1 permet d'obtenir une surface libre importante pour la pièce en verre 20, avec un assemblage aisé. Pour l'assemblage du couvercle 1, la pièce en verre 20 portant le joint annulaire 25 peut être positionnée retournée dans le capot extérieur annulaire 10 lui-même retourné. L'élément annulaire 30 également retourné est alors mis en place dans la paroi intérieure 12 du capot extérieur annulaire 10 en engageant les passages 34 sur les tiges 16. L'élément annulaire 30 vient alors en butée annulaire contre la butée inférieure d'appui 15, ce qui permet de limiter voire éviter les infiltrations entre l'élément annulaire 30 et le capot extérieur annulaire 10. Le corps annulaire 31 vient en appui contre les butées supérieures de retenue 14 et les languettes inférieures 32 viennent en appui contre les butées supérieures de retenue 13. L'élément annulaire 30 et le capot extérieur annulaire 10 sont ainsi solidarisés par clipsage. Une soudure par ultrasons au niveau des tiges 16 permet de conforter l'assemblage et de le rendre indémontable.

La présente invention n'est nullement limitée à l'exemple de réalisation décrit et à ses variantes, mais englobe de nombreuses modifications dans le cadre des revendications.

## Revendications

1. Couvercle (1) pour un récipient culinaire, notamment pour un récipient de travail d'un appareil électroménager de préparation culinaire, comportant un capot extérieur annulaire (10) définissant une ouverture (11) et présentant une paroi intérieure (12), une pièce en verre (20) présentant une bordure périphérique (21), un joint annulaire (25) monté sur la bordure périphérique (21), et un élément annulaire (30), le capot extérieur annulaire (10) étant assemblé avec l'élément annulaire (30) pour maintenir le joint annulaire (25), la paroi intérieure (12) présentant des butées supérieures de retenue (13, 14) réparties autour de l'ouverture (11), le capot extérieur annulaire (10) et/ou l'élément annulaire (30) étant élastiquement déformables pour mettre en place l'élément annulaire (30) dans le capot extérieur annulaire (10) contre le joint annulaire (25), l'élément annulaire (30) venant en appui contre les butées supérieures de retenue (13, 14) lorsque l'élément annulaire (30) est en place dans le capot extérieur annulaire (10) contre le joint annulaire (25), le couvercle (1) comportant un élément annulaire d'étanchéité, **caractérisé en ce que** l'élément annulaire d'étanchéité comprend une couronne porte-joint (40) et un joint d'étanchéité (50) prévu pour venir en appui sur un rebord supérieur du récipient de travail de l'appareil électroménager de préparation culinaire, la couronne porte-joint (40) portant le joint d'étanchéité (50), et **en ce que** le joint annulaire (25) comporte une couronne inférieure (26) venant en appui à l'intérieur de la couronne porte-joint (40).

2. Couvercle (1) selon la revendication 1, **caractérisé en ce que** les butées supérieures de retenue (13, 14) sont agencées à différents niveaux sur la paroi intérieure (12).

3. Couvercle (1) selon l'une des revendications 1 ou 2, **caractérisé en ce que** l'élément annulaire (30) comporte un corps annulaire (31) à partir duquel s'étendent des languettes inférieures (32) réparties autour du corps annulaire (31).

4. Couvercle (1) selon la revendication 3, **caractérisé en ce que** le corps annulaire (31) et les languettes inférieures (32) viennent en appui contre les butées supérieures de retenue (13, 14) lorsque l'élément annulaire (30) est en place dans le capot extérieur annulaire (10) contre le joint annulaire (25).

5. Couvercle (1) selon l'une des revendications 3 ou 4, **caractérisé en ce que** les languettes inférieures (32) présentent des conformations internes (33), et **en ce que** la couronne porte-joint (40) est retenue par les conformations internes (33) sous l'élément annulaire (30).

6. Couvercle (1) selon l'une des revendications 1 à 5, **caractérisé en ce que** la couronne porte-joint (40) est montée libre en rotation sous l'élément annulaire (30).

7. Couvercle (1) selon l'une des revendications 1 à 6, **caractérisé en ce que** le joint d'étanchéité (50) est monté libre en rotation par rapport à la couronne porte-joint (40).

8. Couvercle (1) selon l'une des revendications 1 à 7, **caractérisé en ce que** le corps annulaire (31) présente des passages (34) dans lesquels s'étendent des tiges (16) portées par la paroi intérieure (12) du capot extérieur annulaire (10).

9. Couvercle (1) selon la revendication 8, **caractérisé en ce que** les tiges (16) sont soudées par ultrasons avec le capot extérieur annulaire (10) et l'élément annulaire (30).

10. Couvercle (1) selon l'une des revendications 1 à 9, **caractérisé en ce que** la paroi intérieure (12) présente au moins une butée inférieure d'appui (15) contre laquelle repose l'élément annulaire (30) venant en appui contre les butées supérieures de retenue (13, 14).

11. Couvercle (1) selon la revendication 10, **caractérisé en ce que** ladite au moins une butée inférieure d'appui (15) est annulaire.

12. Couvercle (1) selon l'une des revendications 1 à 11, **caractérisé en ce qu'**il comporte au moins une poignée (60) issue du capot extérieur annulaire (10).

13. Couvercle (1) selon la revendication 12, **caractérisé en ce qu'**il comporte deux poignées (60) opposées issues du capot extérieur annulaire (10).

14. Couvercle (1) selon l'une des revendications 1 à 13, **caractérisé en ce que** le capot extérieur annulaire (10) comporte des languettes internes (18) de verrouillage par baïonnette.

## Patentansprüche

1. Deckel (1) für einen Speisebehälter, insbesondere für einen Arbeitsbehälter eines Elektrohaushaltsgeräts zur Speisenzubereitung, der eine ringförmige Außenabdeckung (10) umfasst, die eine Öffnung (11) definiert und eine Innenwand (12), ein Glasteil (20) mit einem umlaufenden Rand (21), eine am umlaufenden Rand (21) montierte ringförmige Dichtung (25) und ein ringförmiges Element (30) aufweist, wobei die ringförmige Außenabdeckung (10) mit dem ringförmigen Element (30) vereinigt ist, um die ringförmige Dichtung (25) zu halten, wobei die Innenwand (12) obere Halteanschläge (13, 14) aufweist, die um die Öffnung (11) herum verteilt sind, wobei die ringförmige Außenabdeckung (10) und/oder das ringförmige Element (30) elastisch verformbar sind, um das ringförmige Element (30) in der ringförmigen Außenabdeckung (10) gegen die ringförmige Dichtung (25) anzubringen, wobei das ringförmige Element (30) an den oberen Halteanschlägen (13, 14) anliegt, wenn das ringförmige Element (30) in der ringförmigen Außenabdeckung (10) gegen die ringförmige Dichtung (25) angebracht ist, wobei der Deckel (1) ein ringförmiges Dichtelement umfasst, **dadurch gekennzeichnet, dass** das ringförmige Dichtelement einen Dichtungshalterring (40) und eine Dichtung (50) umfasst, die so ausgelegt ist, dass sie an einer oberen Kante des Arbeitsbehälters des Elektrohaushaltsgeräts zur Speisenzubereitung zur Anlage kommt, wobei der Dichtungshalterring (40) die Dichtung (50) trägt, und dass die ringförmige Dichtung (25) einen unteren Ring (26) umfasst, der am Innern des Dichtungshalterrings (40) zur Anlage kommt.

2. Deckel (1) nach Anspruch 1, **dadurch gekennzeichnet, dass** die oberen Halteanschläge (13, 14) auf verschiedenen Ebenen an der Innenwand (12) angeordnet sind.

3. Deckel (1) nach einem der Ansprüche 1 oder 2, **dadurch gekennzeichnet, dass** das ringförmige Element (30) einen ringförmigen Körper (31) umfasst, ab dem sich untere Zungen (32), die um den ringförmigen Körper (31) herum verteilt sind, erstrecken.

4. Deckel (1) nach Anspruch 3, **dadurch gekennzeichnet, dass** der ringförmige Körper (31) und die unteren Zungen (32) an den oberen Halteanschlägen (13, 14) zur Anlage kommen, wenn das ringförmige Element (30) in der ringförmigen Außenabdeckung (10) gegen die Ringdichtung (25) angebracht ist.

5. Deckel (1) nach einem der Ansprüche 3 oder 4, **dadurch gekennzeichnet, dass** die unteren Zungen (32) innere Beschaffenheiten (33) aufweisen, und dass der Dichtungshalterring (40) von den inneren Beschaffenheiten (33) unter dem ringförmigen Element (30) gehalten wird.

6. Deckel (1) nach einem der Ansprüche 1 bis 5, **dadurch gekennzeichnet, dass** der Dichtungshalterring (40) frei drehbar unter dem ringförmigen Element (30) montiert ist.

7. Deckel (1) nach einem der Ansprüche 1 bis 6, **dadurch gekennzeichnet, dass** die Dichtung (50) frei drehbar in Bezug auf den Dichtungshalterring (40) montiert ist.

8. Deckel (1) nach einem der Ansprüche 1 bis 7, **dadurch gekennzeichnet, dass** der ringförmige Körper (31) Durchbrüche (34) aufweist, in die sich von der Innenwand (12) der ringförmigen Außenabdeckung (10) getragene Stäbe (16) erstrecken.

9. Deckel (1) nach Anspruch 8, **dadurch gekennzeichnet, dass** die Stäbe (16) mit der ringförmigen Außenabdeckung (10) und dem ringförmigen Element (30) ultraschallverschweißt sind.

10. Deckel (1) nach einem der Ansprüche 1 bis 9, **dadurch gekennzeichnet, dass** die Innenwand (12) zumindest einen unteren Stützanschlag (15) aufweist, an dem das ringförmige Element (30) anliegt, das an den oberen Halteanschlägen (13, 14) zur Anlage kommt.

11. Deckel (1) nach Anspruch 10, **dadurch gekennzeichnet, dass** besagter zumindest eine Stützanschlag (15) ringförmig ist.

12. Deckel (1) nach einem der Ansprüche 1 bis 11, **dadurch gekennzeichnet, dass** er zumindest einen Griff (60) umfasst, der sich ab der ringförmigen Außenabdeckung (10) erstreckt.

13. Deckel (1) nach Anspruch 12, **dadurch gekennzeichnet, dass** er zwei gegenüberliegende Griffe (60) umfasst, die sich ab der ringförmigen Außenabdeckung (10) erstrecken.

14. Deckel (1) nach einem der Ansprüche 1 bis 13, **dadurch gekennzeichnet, dass** die ringförmige Außenabdeckung (10) innere Bajonettverschlusszungen (18) umfasst.

## Claims

1. Lid (1) for a cooking vessel, in particular for a working vessel of a household electrical appliance for preparing food, comprising an annular outer cap (10) defining an opening (11) and having an inner wall (12), a part made of glass (20) having a peripheral edge (21), an annular seal (25) mounted on the peripheral edge (21), and an annular element (30), the annular outer cap (10) being assembled with the annular element (30) to hold the annular seal (25), the inner wall (12) having upper retaining abutments (13, 14) distributed around the opening (11), the annular outer cap (10) and/or the annular element (30) being elastically deformable to implement the annular element (30) in the annular outer cap (10) against the annular seal (25), the annular element (30) bearing against the upper retaining abutments (13, 14) when the annular element (30) is in place in the annular outer cap (10) against the annular seal (25), the lid (1) comprising an annular sealing element, **characterised in that** the annular sealing element comprises a seal-carrying crown (40) and a seal (50) provided to bear on an upper edge of the working vessel of the household electrical appliance for preparing food, the seal-carrying crown (40) carrying the seal (50), and **in that** the annular seal (25) comprises a lower crown (26) bearing inside the seal-carrying crown (40).

2. Lid (1) according to claim 1, **characterised in that** the upper retaining abutments (13, 14) are arranged at different levels on the inner wall (12).

3. Lid (1) according to one of claims 1 or 2, **characterised in that** the annular element (30) comprises an annular body (31) from which lower strips (32) extend, distributed around the annular body (31).

4. Lid (1) according to claim 3, **characterised in that** the annular body (31) and the lower strips (32) bear against the upper retaining abutments (13, 14) when the annular element (30) is in place in the annular outer cap (10) against the annular seal (25).

5. Lid (1) according to one of claims 3 or 4, **characterised in that** the lower strips (32) have inner conformations (33), and **in that** the seal-carrying crown (40) is retained by the inner conformations (33) under the annular element (30).

6. Lid (1) according to one of claims 1 to 5, **characterised in that** the seal-carrying crown (40) is mounted free in rotation under the annular element (30).

7. Lid (1) according to one of claims 1 to 6, **characterised in that** the seal (50) is mounted free in rotation with respect to the seal-carrying crown (40).

8. Lid (1) according to one of claims 1 to 7, **characterised in that** the annular body (31) has passages (34) wherein rods (16) extend, carried by the inner wall (12) of the annular outer cap (10).

9. Lid (1) according to claim 8, **characterised in that** the rods (16) are welded by ultrasound with the annular outer cap (10) and the annular element (30).

10. Lid (1) according to one of claims 1 to 9, **characterised in that** the inner wall (12) has at least one lower bearing abutment (15) against which the annular element (30) rests, bearing against the upper retaining abutments (13, 14).

11. Lid (1) according to claim 10, **characterised in that** said at least one lower bearing abutment (15) is annular.

12. Lid (1) according to one of claims 1 to 11, **characterised in that** it comprises at least one handle (60) coming from the annular outer cap (10).

13. Lid (1) according to claim 12, **characterised in that** it comprises two opposite handles (60) coming from the annular outer cap (10).

14. Lid (1) according to one of claims 1 to 13, **characterised in that** the annular outer cap (10) comprises inner strips (18) for locking by bayonet.
